# EUROPÄISCHE PATENTSCHRIFT

(11) **EP 2 795 269 B1**
(45) Veröffentlichungstag und Bekanntmachung des Hinweises auf die Patenterteilung: **19.10.2016**
(21) Anmeldenummer: 12809770.6
(22) Anmeldetag: 18.12.2012
(51) Int. Cl.: G01F 23/30, G01F 23/36

(54) **FÜLLSTANDSGEBER**
FILLING LEVEL INDICATOR
TRANSMETTEUR DE NIVEAU DE LIQUIDE

(30) Priorität: 19.12.2011 DE 102011088949
(43) Veröffentlichungstag der Anmeldung: 29.10.2014
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2012/075937
(87) Internationale Veröffentlichungsnummer: WO 2013/092577

(56) Entgegenhaltungen:
- DE-A1- 19 701 246
- DE-A1-102005 047 544
- DE-A1-102008 011 713
- DE-B3-102004 004 102

## Beschreibung

Gegenstand der Erfindung ist ein Füllstandsgeber, bestehend aus einem Halter, einem an diesem drehbar gelagerten Bügel mit einem daran befestigten Hebelarm, einem an dem Hebelarm befestigten Schwimmer, einem im Halter angeordneten Füllstandssensor, wobei der Füllstandssensor ein Substrat, ein darauf angeordnetes Widerstandsnetzwerk und eine Kontaktfederstruktur aufweist, sowie einen mit dem Substrat verbundenen Deckel, welcher das Widerstandsnetzwerk und die Kontaktfederstruktur abdeckt, einem Magnet, der in einer Aufnahme des Bügels angeordnet ist und derart auf die Kontaktfederstruktur einwirkt, dass in Abhängigkeit vom Schwenkbereich ein dem Füllstand entsprechendes elektrisches Signal erzeugbar ist.

Derartige Füllstandsgeber sind bekannt und somit Stand der Technik (DE 10 2005 047 544 A1). Der Magnet ist hierzu auf der dem Dickschichtnetzwerk abgewandten Seite des Substrats angeordnet, wobei der Magnet in einem geringen Abstand über das Substrat bewegt wird. Gehalten ist der Magnet am Hebelarm oder in einem Bügel, der mit dem Hebelarm verbunden ist. Bei der Anordnung des Magneten in einem Bügel besitzt der Bügel eine Aufnahme, in die der Magnet eingesetzt ist. Um ungehindertes Verschwenken des Bügels parallel zum Substrat zu gewährleisten, ist der Magnet in der Aufnahme am Bügel in einem Abstand zum Substrat angeordnet. Es hat sich gezeigt, dass im Kraftstoff befindliche Metallpartikel durch die Bewegungen des Kraftstoffes oder durch Bewegungen des Bügels in den Bereich des Magneten, insbesondere in den Spalt zwischen Substrat und Aufnahme gelangen und dann durch die Magnetkräfte am Magneten beziehungsweise der in diesem Bereich befindlichen Aufnahme anhaften. Dadurch nehmen mit steigender Anzahl der sich anlagernden Metallpartikel die auf die Kontaktfederstruktur einwirkenden Magnetkräfte ab. Im schlimmsten Fall sind die Magnetkräfte nicht mehr ausreichend, um eine Auslenkung der Kontaktfedern zur Kontaktierung mit dem Widerstandsnetzwerk zu bewirken. Dadurch kann es zu Fehlfunktionen des Füllstandsgebers kommen.

Die DE 197 01 246 A1 zeigt einen Füllstandsgeber, insbesondere für den Tank eines Kraftfahrzeuges, bei welchem ein Widerstandsnetzwerk an einem feststehenden Träger angeordnet ist, wobei am Widerstandsnetzwerk entsprechend der Position eines dem Niveau einer Flüssigkeit folgenden Schwimmers ein Ausgangssignal abnehmbar ist. Hierzu weist der Füllstandsgeber eine Magnetvorrichtung auf, die über das widerstandsnetzwerk geführt werden kann. Der verwendete Permanentmagnet ist dabei außerhalb des Gehäuses angeordnet und kann somit großflächig von dem Kraftstoff umspült werden.

Die DE 10 2008 011 713 A1 zeigt einen magnetischen passiven Positionssensor mit einer Grundplatte und einem Deckel, die zusammen ein Gehäuse bilden. Der Magnet ist außerhalb des Gehäuses bewegbar und kann auf ein innerhalb des Gehäuses angeordnetes Widerstandsnetzwerk einwirken. Der Magnet ist dabei ebenfalls derart angeordnet, dass er großflächig von Kraftstoff umspült werden kann und es somit an vielen Außenflächen zu einer Anlagerung von Metallpartikeln kommen kann.

Der Erfindung liegt die Aufgabe zugrunde, einen Füllstandsgeber zu schaffen, mit dem die oben genannten Nachteile vermieden werden.

Gelöst wird die Aufgabe dadurch, dass der Bügel eine Aufnahme für den Magneten aufweist, wobei die Aufnahme eine vom Magnetfeld des Magneten durchdringbare Wandstärke besitzt, so dass Metallpartikel durch das Magnetfeld des Magneten an der Außenseite der Aufnahme festgehalten werden, wobei der Bügel im Bereich der Aufnahme eine Wandstärke mit einer Dicke besitzt, die 20 % bis 50 % des Durchmessers des Magneten beträgt, wobei der Magnet in der Aufnahme (12) derart angeordnet ist, dass er in Richtung des Substrats (4) bündig mit der Unterseite der Aufnahme (12) abschließt.

Diese verringerte Wandstärke bewirkt, dass an der Außenseite der Aufnahme ein wesentlich stärkeres Magnetfeld vorhanden ist, welches nunmehr das Festhalten der Metallpartikel ermöglicht. Dadurch wird die Anzahl von sich im Spalt zwischen Substrat und Aufnahme anlagernden Metallpartikeln erheblich reduziert. Unterbrechungen der Kontaktierung zwischen der Kontaktfederstruktur und dem Widerstandsnetzwerk werden auf diese Weise zuverlässig vermieden.

Eine weitere Reduzierung der Anzahl von Metallpartikeln, welche in den Spalt zwischen Magnet und Substrat gelangen, wird in einer vorteilhaften Ausgestaltung dadurch erreicht, dass im Bereich der Aufnahme für den Magneten an der dem Substrat zugewandten Seite des Bügel und parallel zum Substrat eine scheibenförmige Erweiterung angeordnet ist. Mit der Anordnung dieser scheibenförmigen Erweiterung wird die horizontale Länge des Spalts zwischen der Aufnahme des Magneten und Substrat um die radiale Erstreckung der scheibenförmigen Erweiterung vergrößert.

Vorteilhafterweise besitzt die scheibenförmige Erweiterung eine Dicke von 0,5 mm bis 3 mm. Mit dieser geringen Dicke ist sichergestellt, dass die Partikel durch die Kraftstoffbewegungen oder die Bewegung des Bügels auf die scheibenförmige Erweiterung und somit in den Bereich des Magnetfeldes gelangen.

Die radiale Erstreckung der scheibenförmigen Erweiterung kann dabei so groß gewählt werden, das am radialen Umfang der Erweiterung das Magnetfeld so gering ist, dass es nur noch einen geringen bis vernachlässigbaren Einfluss auf die durch den Kraftstoff bewegten Metallpartikel hat. Dadurch wird vermieden, dass der Magnet das Eindringen der Metallpartikel in den Spalt unterstützt. In vorteilhafter Ausgestaltung besitzt die scheibenförmige Erweiterung eine radiale Ausdehnung, die das Zwei- bis Vierfache des Durchmessers des Magneten beträgt.

Ein Eindringen der Metallpartikel in den Spalt lässt sich weiter dadurch verhindern, dass die scheibenförmige Erweiterung einen geringen Abstand zum Substrat, vorzugsweise von 0,1 mm bis 1,5 mm besitzt. Dadurch wird nicht nur ein ausreichend kleiner Spalt, sondern auch ein ungehindertem Verschwenken des Bügels erreicht.

Der Bügel mit der Aufnahme und der scheibenförmigen Erweiterung lässt sich besonders einfach herstellen, wenn die scheibenförmige Erweiterung bündig mit der Seite der Aufnahme abschließt, welche dem Substrat zugewandt ist.

Da Kraftstoffbewegungen im Kraftstoffbehälter mit den damit verbundenen Füllstandsschwankungen immer mit einem Verschwenken des Hebelarms und damit des Bügels einhergehen, ist die Bewegung des Bügels die die vorrangige Bewegung, mit der die Partikel im Kraftstoff in den Spalt zwischen Magnet und Substrat gelangen können. Aus diesem Grund ist es gemäß einer weiteren Ausgestaltung ausreichend, die scheibenförmige Erweiterung lediglich an den beiden Längsseiten des Bügels auszubilden. Das der Lagerung des Bügels abgewandte freie Ende des Bügels wird lediglich durch die Aufnahme für den Magneten gebildet.

Das Führen der Metallpartikel vom radial äußeren Rand der scheibenförmigen Erweiterung zum Magneten wird erleichtert, wenn die Erweiterung eine von radial außen in Richtung Bügel zunehmende Dicke besitzt, wobei die dem Substrat zugewandten Seite der scheibenförmigen Erweiterung parallel zum Substrat ausgerichtet ist. Mit dieser Ausgestaltung bildet die scheibenförmige Erweiterung eine Art Rampe, auf der die Metallpartikel durch die Kraftstoffbewegungen in Richtung der Außenseite der Aufnahme und damit in den Bereich des Magnetfeldes an der Außenseite des Bügels geleitet werden.

In einer vorteilhaften Ausgestaltung weist die Rampe einen Winkel von 15° - 60°, vorzugsweise 20° - 45° auf. Die Rampe kann von radial außen nach radial innen bis zu Bügel ausgebildet sein, oder von radial außen beginnend vor dem Bügel enden, so dass die Rampe die Form einer Fase besitzt. Anstelle einer geradlinigen und leicht zu fertigenden Rampe, kann diese in einer anderen Ausgestaltung einen nicht linearen, insbesondere einen konkaven Verlauf aufweisen. Diese Ausbildung ermöglicht den Metallpartikeln einen leichteren Übergang zur Außenseite der Aufnahme und damit in das Magnetfeld.

An mehreren Ausführungsbeispielen wird die Erfindung näher erläutert. Es zeigen in:
- Fig. 1: einen Füllstandsgeber nach dem Stand der Technik,
- Fig. 2: einen erfindungsgemäßen Füllstandsgeber und
- Fig. 2a bis 4a: weitere Ausführungsformen des Füllstandsgebers.

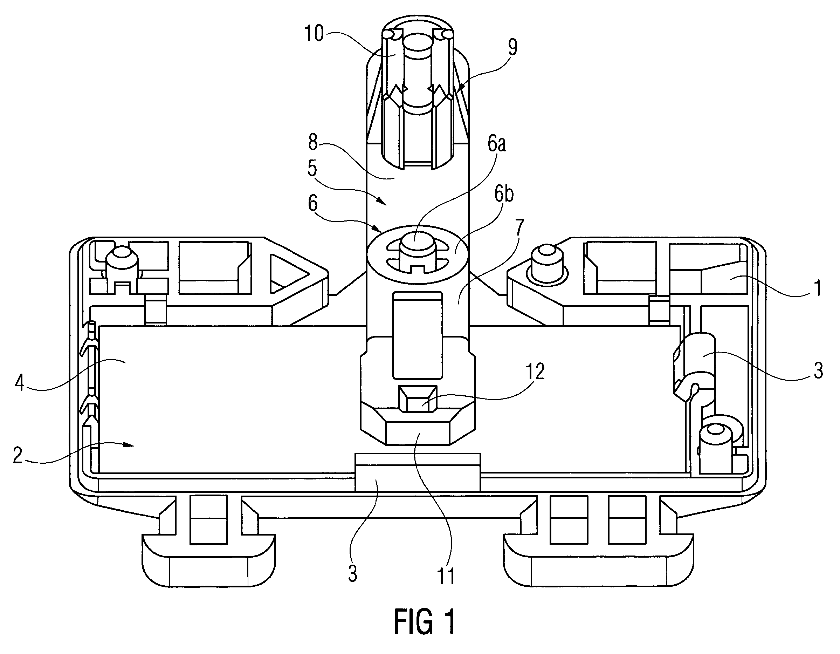

Der Füllstandsgeber in Figur 1 besitzt einen Halter 1, in dem ein Füllstandssensor 2 mittels Rasthaken 3 eingeklipst ist. Der Füllstandssensor 2 besteht aus einem Substrat 4 und einem damit verbundenen Deckel, der in der gezeigten Darstellung dem Halter 1 zugewandt und somit nicht sichtbar ist. Ein Bügel 5 besitzt einen ersten Arm 7 und einen zweiten Arm 8, welche eine mittige Lagerung 6 einschließen, über die der Bügel 5 drehbar im Halter 1 aufgenommen ist. Der Bügel 5 besitzt eine gleichmäßige Breite, wobei die Breite des Bügels 5 durch den Lagerzapfen 6a und die Lagerstelle 6b der Lagerung 6 bestimmt wird. Der erste Arm 7 des Bügels 5 überstreicht bei einer Drehung des Bügels das Substrat 4. Der zweite Arm 8 des Bügels 5 besitzt eine Aufnahme 9, in der ein nicht dargestellter Hebelarm eingesteckt und von Rasthaken 10 des Bügels 5 gehalten wird. Am freien Ende des Hebelarms ist ein Schwimmer angeordnet, so dass durch das Verschwenken des Hebelarms der Bügel bewegt wird. Der erste Arm 7 besitzt an seinem Ende 11 eine Aufnahme 12, in der ein nicht dargestellter Magnet angeordnet ist. Bei einem Verschwenken des Hebelarms und des Bügels 5 wird der Magnet in einer bogenförmigen Bahn über dem Substrat 4 bewegt. Durch die dabei mit dem Widerstandsnetzwerk in Kontakt gebrachten Kontaktfedern wird so ein dem Füllstand entsprechendes elektrisches Signal erzeugt. Um ein freies Verschwenken des Bügels zu gewährleisten, ist der Bügel 5 und der Magnet mit geringem Abstand zum Substrat 4 angeordnet, so dass sich zwischen dem Bügel 5 und dem Substrat 4 ein Spalt ausbildet.

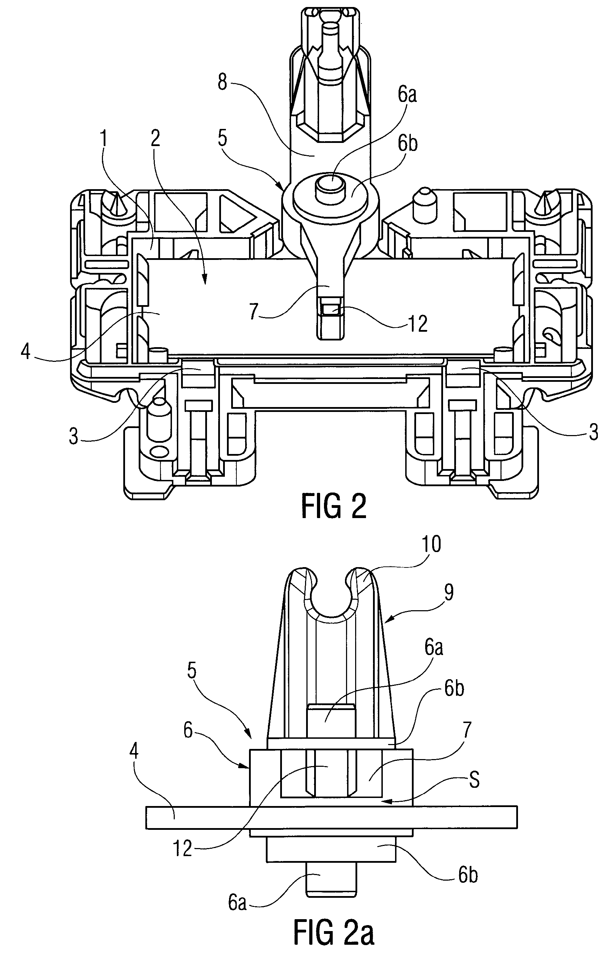

Figur 2 zeigt den Halter 1 mit dem Füllstandssensor 2 und dem Bügel 5. Der Bügel 5 besitzt ebenso eine Aufnahme 12, in der der Magnet 11 angeordnet ist. Im Gegensatz zu Figur 1 ist der Bügel 5 jedoch derart gestaltet, dass er im Bereich der Aufnahme 12 eine verminderte Wandstärke besitzt. Die Wandstärke beträgt in diesem Bereich in etwa 30 % des Durchmessers des Magneten. Damit ist die Wandstärke dünn genug, um vom Magnetfeld des Magneten durchdrungen zu werden. Durch dieses Magnetfeld werden Metallpartikel, welche durch den Kraftstoff in diesen Bereich gespült werden, an der Außenseite der Aufnahme 12 festgehalten, wodurch die Anzahl der Partikel, welche in den Spalt zwischen Bügel 5 und Substrat 4 eindringen können, erheblich reduziert wird. Die durch die verringerte Wandstärke im Bereich der Aufnahme 12 resultierende geringere Breite des Bügels 5 muss nicht auf den Bereich der Aufnahme beschränkt sein. In dieser Ausgestaltung besitzt der gesamte erste Arm 7 eine geringere Breite als der zweite Arm 8.

Figur 2a zeigt den Bügel 5 mit dem Substrat 4 ohne den Halter in einer Ansicht von vorn. Der erste Arm 7 besitzt eine geringere Breite als die Lagerung 6 mit dem Lagerzapfen 6a. Bügel 5 und Substrat 4 sind derart im Halter angeordnet, dass sich zwischen der Aufnahme 12 am Arm 7 und dem Substrat 4 ein Spalt S ausbildet. Die Lagerung des Hebelarms im Bügel 5 erfolgt mittels der Rasthaken 10 der Aufnahme 9. Der nicht sichtbare Magnet ist so in der Aufnahme 12 angeordnet, dass der in Richtung Substrat 4 bündig mit der Unterseite der Aufnahme 12 abschließt.

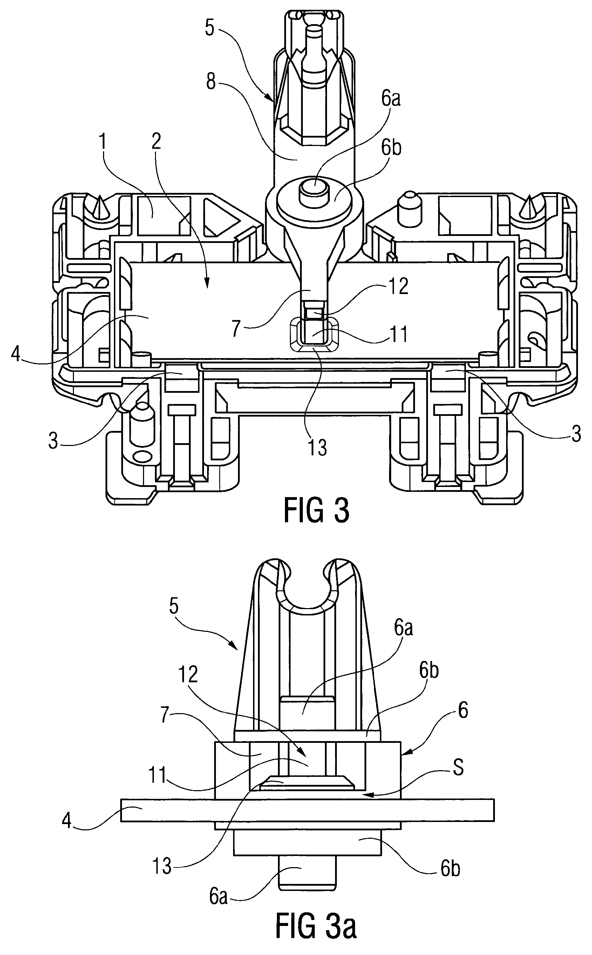

Der Bügel 5 in Figur 3 unterscheidet sich von dem Bügel in Figur 2 dadurch, dass der erste Arm 7 im Bereich der Aufnahme 12 eine scheibenförmige Erweiterung 13 aufweist. Die scheibenförmige Erweiterung 13 ist an der dem Substrat 4 zugewandten Seite des Bügels 5 und parallel zum Substrat 4 angeordnet. Die scheibenförmige Erweiterung 13 besitzt eine Dicke vom 3 mm. Die scheibenförmige Erweiterung 13 ist dabei so ausgebildet, dass sie die Aufnahme 12 an der Unterseite des Arms 7 umschließt. Neben der gezeigten rechteckigen Form kann die scheibenförmige Erweiterung 13 auch rund ausgebildet sein. Wie in Figur 3a dargestellt besitzt der Spalt S infolge der scheibenförmigen Erweiterung 13 eine horizontale Länge die größer als die Breite des Arms 7 ist. Das Eindringen von Metallpartikeln in den horizontal verlängerten Spalt S wird dadurch weiter erschwert.

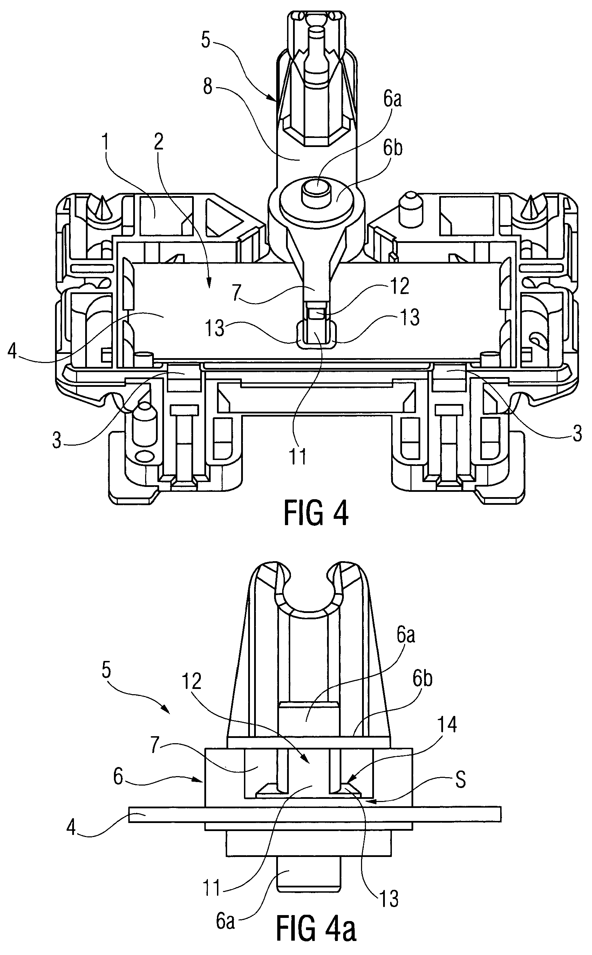

Die Figuren 4, 4a zeigt eine weitere Ausführungsform des Bügels 5, bei der die scheibenförmige Erweiterung 13 im Bereich der Aufnahme 12 nur noch an den Längsseiten des ersten Arms 7 des Bügels 5 ausgebildet ist. Die scheibenförmige Erweiterung 13 schließt somit bündig mit dem freien Ende 11 des ersten Arms 7 ab. Die scheibenförmige Erweiterung 13 besitzt an ihrer dem Substrat 4 abgewandten Seite eine Fase 14. Die Fase bewirkt, dass vom Kraftstoff herangespülte Metallpartikel an die Außenseite der Aufnahme 12 und somit in den Einflussbereich des Magnetfeldes geleitet werden. Dadurch wird eine noch bessere Abführung der Metallpartikel aus dem Eintrittsbereich des Spalts S am radial außenliegenden Rand der scheibenförmigen Erweiterung 13 ermöglicht. Die Fase hat einen Winkel von 40°.

## Patentansprüche

1. Füllstandsgeber, bestehend aus einem Halter, einem an diesem drehbar gelagerten Bügel mit einem daran befestigten Hebelarm, einem an dem Hebelarm befestigten Schwimmer, einem im Halter angeordneten Füllstandssensor, wobei der Füllstandssensor ein Substrat, ein darauf angeordnetes Widerstandsnetzwerk und eine Kontaktfederstruktur aufweist, sowie einen mit dem Substrat verbundenen Deckel, welcher das Widerstandsnetzwerk und die Kontaktfederstruktur abdeckt, einem Magnet, der mit dem Bügel oder dem Hebelarm verbunden ist und derart auf die Kontaktfederstruktur einwirkt, dass in Abhängigkeit vom Schwenkbereich ein dem Füllstand entsprechendes elektrisches Signal erzeugbar ist, **dadurch gekennzeichnet, dass** der Bügel (5) eine Aufnahme (12) für den Magneten aufweist, wobei die Aufnahme (12) eine vom Magnetfeld des Magneten durchdringbare Wandstärke besitzt, so dass Metallpartikel durch das Magnetfeld des Magneten an der Außenseite der Aufnahme (12) festgehalten werden, wobei der Bügel im Bereich der Aufnahme (12) eine Wandstärke mit einer Dicke besitzt, die 20 % bis 50 % des Durchmessers des Magneten beträgt, wobei der Magnet in der Aufnahme (12) derart angeordnet ist, dass er in Richtung des Substrats (4) bündig mit der Unterseite der Aufnahme (12) abschließt.

2. Füllstandsgeber nach Anspruch 1, **dadurch gekennzeichnet, dass** die Aufnahme (12) an dem dem Substrat (4) zugewandten Seite des Bügels (5) eine scheibenförmige Erweiterung (13) aufweist, die parallel zum Substrat (4) angeordnet ist.

3. Füllstandsgeber nach Anspruch 2, **dadurch gekennzeichnet, dass** die scheibenförmige Erweiterung (13) eine Dicke von 0,5 mm bis 3 mm besitzt.

4. Füllstandsgeber nach Anspruch 2 oder 3, **dadurch gekennzeichnet, dass** die scheibenförmige Erweiterung (13) eine radiale Ausdehnung besitzt, die das Zwei- bis Vierfache des Durchmessers des Magneten beträgt.

5. Füllstandsgeber nach einem der Ansprüche 2 bis 4, **dadurch gekennzeichnet, dass** die scheibenförmige Erweiterung (13) einen Abstand zum Substrat von vorzugsweise von 0,1 mm bis 1,5 mm besitzt.

6. Füllstandsgeber nach einem der Ansprüche 2 bis 5, **dadurch gekennzeichnet, dass** die scheibenförmige Erweiterung (13) bündig mit der Seite der Aufnahme (12) abschließt, welche dem Substrat (4) zugewandt ist.

7. Füllstandsgeber nach einem der Ansprüche 2 bis 6, **dadurch gekennzeichnet, dass** die scheibenförmige Erweiterung (13) lediglich an den Längsseiten des Bügels (5) ausgebildet ist und dass sich der Bügel (5) an seinem freien Ende über die Aufnahme (12) für den Magneten hinaus erstreckt.

8. Füllstandsgeber nach zumindest einem der vorhergehenden Ansprüche, **dadurch gekennzeichnet, dass** die scheibenförmige Erweiterung (13) eine von radial außen in Richtung Bügel (5) zunehmende Dicke nach Art einer Rampe besitzt, wobei die dem Substrat (4) zugewandten Seite der scheibenförmigen Erweiterung (13) parallel zum Substrat (4) ausgerichtet ist.

9. Füllstandsgeber nach Anspruch 8, **dadurch gekennzeichnet, dass** die Rampe einen Winkel von 15° - 60° besitzt.

## Claims

1. Filling level indicator, comprising a holder, a bracket which is rotatably mounted on the said holder and has a lever arm fastened to it, a float which is fastened to the lever arm, a filling level sensor which is arranged in the holder, wherein the filling level sensor has a substrate, a resistor network which is arranged on the said substrate, and a contact spring structure, and also a cover which is connected to the substrate and which covers the resistor network and the contact spring structure, a magnet which is connected to the bracket or to the lever arm and acts on the contact spring structure in such a way that an electrical signal which corresponds to the filling level can be generated as a function of the pivot range, **characterized in that** the bracket (5) has a mount (12) for the magnet, wherein the mount (12) has a wall thickness which can be penetrated by the magnetic field of the magnet, so that metal particles are firmly held on the outer face of the mount (12) by the magnetic field of the magnet, wherein the bracket has a wall thickness of 20% to 50% of the diameter of the magnet in the region of the mount (12), wherein the magnet is arranged in the mount (12) in such a way that it terminates flush with the bottom face of the mount (12) in the direction of the substrate (4).

2. Filling level indicator according to Claim 1, **characterized in that** the mount (12) has a disc-like widened portion (13), which is arranged parallel to the substrate (4), on that side of the bracket (5) which faces the substrate (4).

3. Filling level indicator according to Claim 2, **characterized in that** the disc-like widened portion (13) has a thickness of from 0.5 mm to 3 mm.

4. Filling level indicator according to Claim 2 or 3, **characterized in that** the disc-like widened portion (13) has a radial extent which is two to four times the diameter of the magnet.

5. Filling level indicator according to one of Claims 2 to 4, **characterized in that** the disc-like widened portion (13) is at a distance of preferably 0.1 mm to 1.5 mm from the substrate.

6. Filling level indicator according to one of Claims 2 to 5, **characterized in that** the disc-like widened portion (13) terminates flush with that side of the mount (12) which faces the substrate (4).

7. Filling level indicator according to one of Claims 2 to 6, **characterized in that** the disc-like widened portion (13) is formed only on the longitudinal sides of the bracket (5), and **in that** the bracket (5) extends beyond the mount (12) for the magnet at its free end.

8. Filling level indicator according to at least one of the preceding claims, **characterized in that** the disc-like widened portion (13) has a thickness which increases radially from the outside in the direction of the bracket (5) in the manner of a ramp, wherein that side of the disc-like widened portion (13) which faces the substrate (4) is oriented parallel to the substrate (4).

9. Filling level indicator according to Claim 8, **characterized in that** the ramp has an angle of 15°-60°.

## Revendications

1. Indicateur de niveau, composé d'un support, d'un étrier monté rotatif sur celui-ci et sur lequel est fixé un bras de levier, un flotteur fixé au bras de levier, une sonde de niveau montée dans le support, la sonde de niveau possédant un substrat, un réseau résistif disposé sur celui-ci et une structure à ressort de contact, ainsi qu'un couvercle relié au substrat, lequel recouvre le réseau résistif et la structure à ressort de contact, un aimant qui est relié à l'étrier ou au bras de levier et qui agit sur la structure à ressort de contact de telle sorte qu'un signal électrique correspondant au niveau de remplissage peut être généré en fonction de la plage de pivotement, **caractérisé en ce que** l'étrier (5) possède un logement (12) pour l'aimant, le logement (12) possédant une épaisseur de paroi qui peut être traversée par le champ magnétique de l'aimant, de sorte que des particules métalliques soient retenues sur le côté extérieur du logement (12) par le champ magnétique de l'aimant, l'étrier possédant dans la zone du logement (12) une épaisseur de paroi dont la valeur est égale à 20 % à 50 % du diamètre de l'aimant, l'aimant étant disposé dans le logement (12) de telle sorte qu'il se termine à fleur avec le côté inférieur du logement (12) en direction du substrat (4).

2. Indicateur de niveau selon la revendication 1, **caractérisé en ce que** le logement (12) possède sur le côté de l'étrier (5) qui fait face au substrat (4) un élargissement (13) en forme de disque qui est disposé parallèlement au substrat (4).

3. Indicateur de niveau selon la revendication 2, **caractérisé en ce que** l'élargissement (13) en forme de disque possède une épaisseur de 0,5 mm à 3 mm.

4. Indicateur de niveau selon la revendication 2 ou 3, **caractérisé en ce que** l'élargissement (13) en forme de disque possède une extension radiale qui est deux à quatre fois plus grande que le diamètre de l'aimant.

5. Indicateur de niveau selon l'une des revendications 2 à 4, **caractérisé en ce que** l'élargissement (13) en forme de disque possède un écart par rapport au substrat de préférence de 0,1 mm à 1,5 mm.

6. Indicateur de niveau selon l'une des revendications 2 à 5, **caractérisé en ce que** l'élargissement (13) en forme de disque se termine à fleur avec le côté du logement (12) qui fait face au substrat (4).

7. Indicateur de niveau selon l'une des revendications 2 à 6, **caractérisé en ce que** l'élargissement (13) en forme de disque est uniquement formé sur les côtés longitudinaux de l'étrier (5) et **en ce que** l'étrier (5) s'étend au niveau de son extrémité libre au-delà du logement (12) pour l'aimant.

8. Indicateur de niveau selon au moins l'une des revendications précédentes, **caractérisé en ce que** l'élargissement (13) en forme de disque possède une épaisseur qui augmente depuis l'extérieur dans le sens radial en direction de l'étrier (5) à la manière d'une rampe, le côté de l'élargissement (13) en forme de disque qui fait face au substrat (4) étant orienté parallèlement au substrat (4).

9. Indicateur de niveau selon la revendication 8, **caractérisé en ce que** la rampe possède un angle de 15° à 60°.
